**Europäisches Patentamt**

**European Patent Office**

**Office européen des brevets**

(11) Veröffentlichungsnummer : **0 474 060 B1**

## (12) EUROPÄISCHE PATENTSCHRIFT

(45) Veröffentlichungstag der Patentschrift :
**04.10.95 Patentblatt 95/40**

(51) Int. Cl.$^6$ : **H02M 5/458**

(21) Anmeldenummer : **91114148.9**

(22) Anmeldetag : **23.08.91**

(54) Vierquadranten-Wechselstrom-Umrichter.

(30) Priorität : **25.08.90 DE 4026955**

(43) Veröffentlichungstag der Anmeldung :
**11.03.92 Patentblatt 92/11**

(45) Bekanntmachung des Hinweises auf die
Patenterteilung :
**04.10.95 Patentblatt 95/40**

(84) Benannte Vertragsstaaten :
**CH FR GB IT LI NL SE**

(56) Entgegenhaltungen :
**GB-A- 2 200 259**

(56) Entgegenhaltungen :
**GB-A- 2 206 006**
**IEEE TRANSACTIONS ON INDUSTRY APPLI-
CATIONS, Band 25, Nr. 6, November/Dezem-
ber 1989, Seiten 1167-1175, New York, US; A.
RAMA PRASAD et al.: "A high-frequency offline SMR converter with improved performance characteristics"**

(73) Patentinhaber : **Semikron Elektronik GmbH**
**Postfach 82 02 51**
**D-90253 Nürnberg (DE)**

(72) Erfinder : **Srajber, Dejan**
**Hans-Sachs-Strasse 18**
**W-8502 Zirndorf (DE)**

EP 0 474 060 B1

**Beschreibung**

Die Erfindung betrifft einen Umrichter für umkehrbaren Leistungsfluß gemäß Patentanspruch 1.

Als Umrichter wird eine Vorrichtung bezeichnet zur Übertragung von elektrischer Energie aus einer Energiequelle auf einen Energieverbraucher, welcher gegenüber der Energiequelle, nachfolgend nur mit Quelle bezeichnet, unterschiedliche Kenngrößen, wie Betriebsspannung, Betriebsfrequenz oder Phasenzahl aufweist.

Die Energieübertragung ist besonders vorteilhaft mit Halbleiterbauelementen möglich, wobei schaltbare und nichtschaltbare Bauformen verwendet werden. Es wird ein hoher Wirkungsgrad angestrebt. Da aus Energieverbrauchern auch Energie zur Quelle zurückfließen kann, wird ein Aufbau für Energiefluß in beiden Richtungen und, zum universellen Einsatz im Gleich- und Wechselrichterbetrieb, für sogenannten Vier-Quadranten-Betrieb gefordert.

Die bekannten Vorrichtungen zur Energieübertragung sind wie folgt bezeichnet:
Gleichstrom-Gleichstrom-Wandler als Zerhacker,
Wechselstrom-Gleichstrom-Wandler als Gleichrichter,
Gleichstrom-Wechselstrom-Wandler als Wechselrichter und
Wechselstrom-Wechselstrom-Wandler ohne Zwischenkreis als Cyclo-Konverter. Für alle Arten von Energiewandlern ist nachfolgend der Begriff Umrichter verwendet.

Die Quelle sowie die zugehörigen Schaltungselemente sind jeweils dem Begriff (Umrichter-) Eingangsseite, der Verbraucher sowie die zugehörigen Schaltelemente sind jeweils dem Begriff (Umrichter-) Ausgangsseite zugeordnet.

Werden Umrichter mit im Vergleich zur eingangsseitigen und/oder ausgangsseitigen Betriebsfrequenz höherer Schaltfrequenz betrieben, so sind zur Vermeidung oder Verminderung von Oberwellen Filter erforderlich. Bekannte Umrichter weisen daher eine Anzahl von eingangs- und ausgangsseitigen Schaltelementen und jeweils zusätzlich Oberwellenfilter auf.

Außerdem kann ein Energiespeicherelement, d.h. eine Drosselspule oder ein Kondensator auf einer Seite des Umrichters oder aber zwischen Eingang und Ausgang vorgesehen sein. Für eine galvanische Trennung sowie für unterschiedliche Betriebsspannungen von Eingangs- und Ausgangsseite ist weiter ein Transformator erforderlich. Liegt an einer Seite eines Umrichters Wechselspannung, so macht der Betrieb bei Frequenz dieser Wechselspannung zusätzlich einen Transformator notwendig.

Die bekannten Umrichterbauformen mit den vorgenannten Schaltungsbauelementen sind kostenintensiv und erfordern großen Platzbedarf sowie hohen Aufwand zum Zusammenbau. Dem Bedürfnis nach wirtschaftlichen Aufbauten mit weniger Raumbedarf sollte mit Umrichtern entsprochen werden, welche anstelle des Trenntransformators einen zwischen Eingang und Ausgang befindlichen Hilfskreis aufweisen. Dieser besteht aus einem Transformator für höhere Übertragungsfrequenzen sowie aus Halbleiterelementen, die für höhere Schaltfrequenzen geeignet sind. Der Transformator hat kleinere Abmessungen und dient gleichzeitig zur galvanischen Trennung von Umrichterein- und -ausgang. Ein solcher Aufbau ermöglicht auch die Verwendung von Oberwellenfiltern mit kleinerer Baugröße.

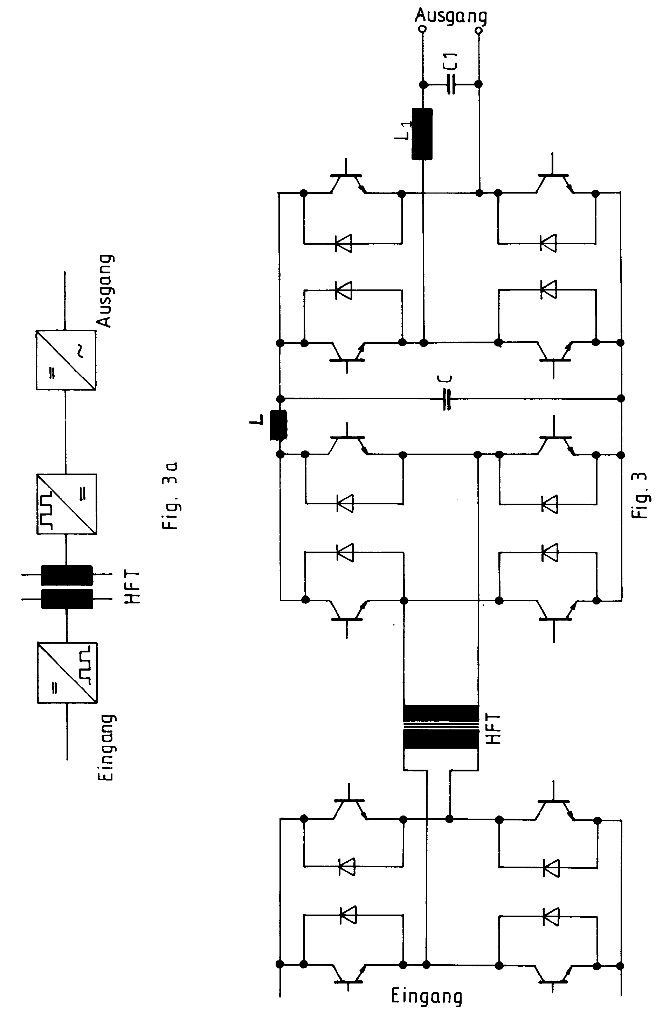

Die Fig.3a zeigt als Blockschaltbild bzw. die Fig.3b als Schaltbild einen entsprechned ausgeführten, bekannten, einphasigen Umrichter. Er besteht aus einem eingangsseitigen Wechselrichter zur Umwandlung der Eingangsgleichspannung in eine hochfrequente Spannung am Zwischenkreis. Dieser weist einen Hochfrequenz-Übertragungs-Transformator und eine Gleichrichterbrückenschaltung auf. Über den Hilfskreis wird die Energie auf den ausgangsseitigen Wechselrichter übertragen. Zwischen beiden sind Filterelemente angeordnet. Der ausgangsseitige Wechselrichter wird derart angesteuert, daß sich eine annähernd sinusförmige Ausgangsspannung ergibt. Die Zweige der Brückenschaltungen sind für einen Vierquadrantenbetrieb ausgebildet. Die Darstellung zeigt für einen solchen, gegenüber anderen bekannten Anordnungen verbesserten Aufbau einen unerwünscht hohen Schaltungs- und Steueraufwand.

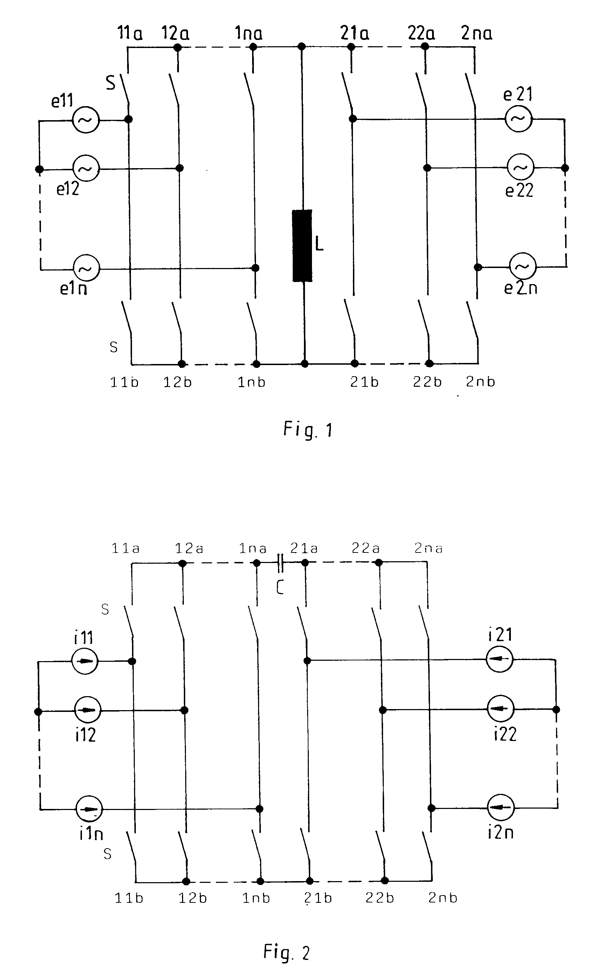

Gb 22 00 259 gibt in Fig. 1 eine der eigenen Anmeldung naheliegende Schaltungsanordnung für einen Umrichter an. Stromquellen und Verbraucher sind vom Stromtyp. Leider ist diese konkrete Schaltung fachlich nicht nachvollziehbar, sie kann nicht Grundlage für einen funktionstüchtigen Umrichter sein. So sind beispielsweise Induktivitäten auf der Netzteilseite erforderlich, um die Ströme zwischen Netzspannung und Zwischenkreisspannung zu begrenzen. Wenn unnötiger Weise ein Transistor $Q_{13}$ eingebaut wird, dann ist eine entsprechende Freilaufdiode über $R_1$ erforderlich.

In GB 22 06 006 wird gleichfalls eine der eigenen Erfindung naheliegende Umrichtereinheit beschrieben. Sowohl GB 22 00 259 als auch GB 22 06 006 beschreiben eigentlich zwei in Reihe geschaltete Umrichter, eine AC/DC Gleichrichter und einen DC/AC Wechselrichter. in beiden Umrichtern ist ein direkter Leistungsfluß möglich, es gibt keine galvanische Trennung mittels Transformator.

Aus US 43 99 499 ist ein Umrichter für umkehrbaren Leistungsfluß, d.h. für einen Vier-Quadranten-Betrieb bekannt, von dem sich der Gegenstand der Anmeldung im Anspruch 1. durch die Merkmale d), e) und h) sowie j), und unterscheidet. Im Prinzip besteht diese Schaltung aus zwei Geräten und es ist eine sehr komplexe Steuerung nötig.

Der Erfindung liegt die Aufgabe zugrunde, Umrichter für mehrphasige Quellen und Verbraucher im Vier-QuadrantenBetrieb anzugeben, die mit gegenüber bekannten Anordnungen weiter vereinfachtem Aufbau arbeiten, wobei die Schaltfrequenz wesentlich größer als die Eingangs- bzw. Ausgangsfrequenz ist, der Transformator für die galvanische Trennung und Spannungsanpassung für die Schaltfrequenz geeignet ist, die einen Grundschwingungsfaktor cos $\varphi_1 = 1$ aufweisen und die Forderung der Funktionstüchtigkeit bei unterschiedlichen Spannungen, Amplituten und Frequenzen der Ein- und Ausgangsseiten erfüllen.

Die Lösung der Aufgabe besteht bei einem Umrichter der eingangs genannten Art in den Merkmalen des Anspruches 1. Vorteilhafte Weiterbildungen der Erfindung sind in den Unteransprüchen angegeben.

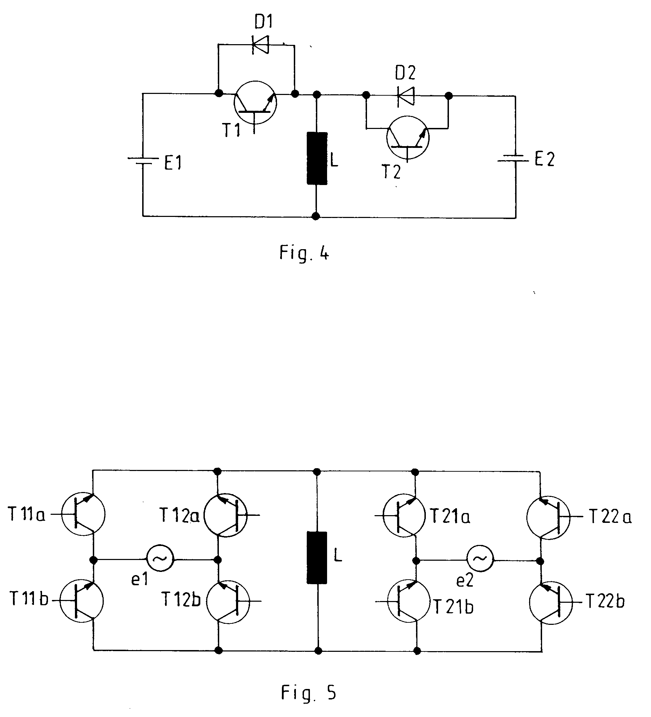

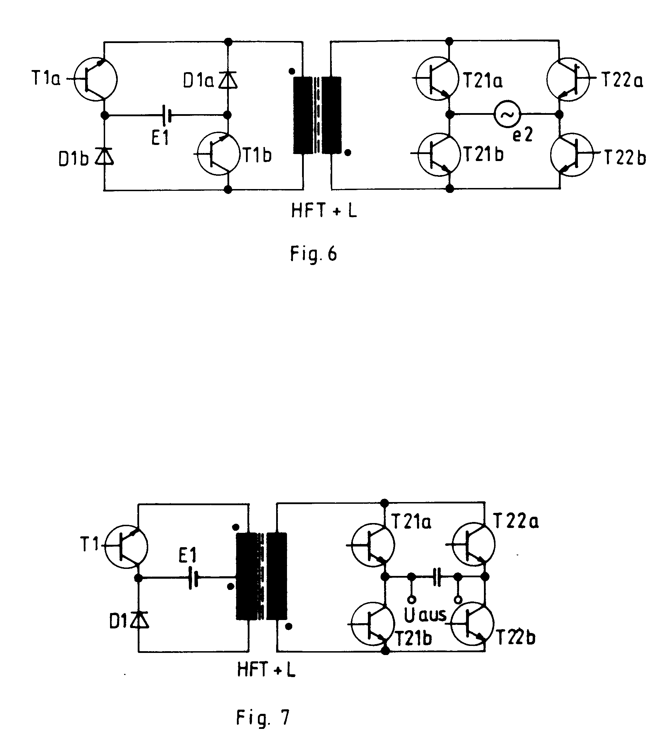

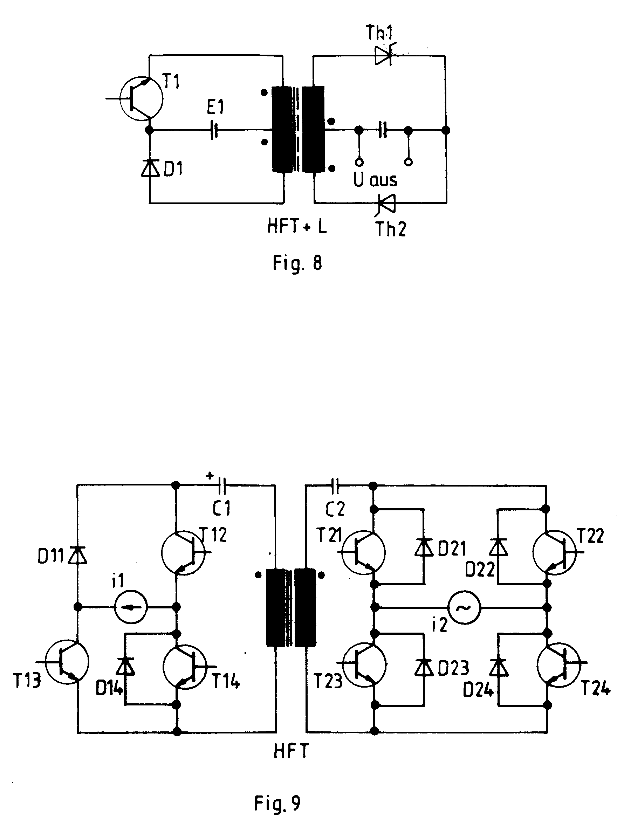

Anhand der in den Figuren 1, 2 und 5 bis 9 dargestellten Ausführungsbeispiele wird die Erfindung erläutert. Die Figuren 1 und 2 zeigen schematisch je eine Mehrphasenanordnung mit zwischenliegendem Energiespeicherelement. In Figur 4 ist eine bekannte, vereinfachte Ausführung der Anordnung nach Fig.1 dargestellt, Figur 5 zeigt eine erfindungsgemäße Weiterbildung der Anordnung nach Fig.4. Figur 6 zeigt einen Umrichter mit Trenntransformator, Figur 7 einen solchen mit eingangsseitiger Mittelpunktschaltung, Figur 8 einen entsprechenden mit eingangs- und ausgangsseitiger Mittelpunktschaltung und Figur 9 eine erfindungsgemäß vereinfachte Ausführung einer Anordnung nach Fig.2. Für gleiche Teile sind in allen Figuren gleiche Bezeichnungen gewählt.

Bei einem Umrichter nach Fig.1 sind die Quellen $e_{11}$ bis $e_{1n}$ in Stern geschaltet. Es kann auch eine Dreieckschaltung derselben vorgesehen sein. Die Quellen $e_{11}$ bis $e_{1n}$ bilden zusammen mit den unmittelbar mit ihnen verbundenen Schaltelementen $5_{11a}$, $5_{11b}$ bis $S_{1na}$, $S_{1nb}$ die Eingangsseite des Umrichters, an welcher als Last eine Drosselspule L liegt. Mit drei Quellen für dreiphasige Eingangsspannung sowie zwei Schaltelementen je Phase ist gemäß der Darstellung in der Figur eine Drehstrombrückenschaltung gegeben.

Nach dem Einschalten entsprechender Schalter und dem erreichen des vollen Stromes durch die Drosselspule wirkt diese als Konstantstromquelle auf die Umrichter-Ausgangsseite.

Diese sei entsprechend der Eingangsseite als Drehstrom-Brückenschaltung mit den Schaltelementen $S_{21a}$, $S_{21b}$ bis $S_{23a}$, $S_{23b}$ sowie mit den ebenfalls in Stern geschalteten Verbrauchern $e_{21}$ bis $e_{23}$ aufgebaut. Mit der Bezeichnung der letzteren soll auch der Fall einer Funktion derselben als Spannungsquellen bei Energiefluß von der Umrichter-Ausgangsseite zur -Eingangsseite berücksichtigt werden.

Zur Energieübertragung auf die Ausgangsseite werden die zugeordneten Schaltelemente $S_{21a}$ bis $S_{23b}$ durchgeschaltet. Nachstehend ist der leitende Zustand der Halbleiter-Schaltelemente jeweils mit "geschaltet" und der nicht leitende Zustand mit "geöffnet" bezeichnet. Weiter ist jedes Schaltelement in den Fig.1 und 2 im Hinblick auf die dort gewählte allgemeinste Darstellung eines Schalters mit Schaltmodul bezeichnet. Die mit dem Schalten der eingangsseitigen Schaltmodule beginnende und mit dem Öffnen der ausgangsseitigen Schaltmodule nach Erreichen eines Strom-Soll-Wertes endende Betriebsdauer sei eine Schaltperiode zur Erzielung und Aufrechterhaltung von vorgegebenen Kenngrößenwerten. Erfindungsgemäß ist die Betriebsdauer oder Schaltperiode $t_s$ in zwei Teile unterteilt. In der Schaltzeit $t_{s1}$ sind die eingangsseitigen Schaltmodule z.B. nur einer Phase ($S_{11a}$, $S_{12b}$) so geschaltet, daß der Ist-Wert des Stromes I durch die Drosselspule zu einem Soll-Wert hin verändert wird. Sämtliche ausgangsseitigen Schaltmodule sind geöffnet. Um eine bestimmte Stromänderung zu erzielen, kann der Umrichter eingangsseitig wie folgt betrieben werden: Im Falle eines Ist-Wertes des Drosselstromes kleiner als der vorgegebene Soll-Wert werden eingangsseitig Schaltmodule mittels einer Steuerschaltung so gesteuert, daß abhängig von der Differenz von Ist-Wert und Soll-Wert einzelne Schaltmodule geschaltet sind, d.h. zur Erhöhung des Laststromes beitragen. Dann nimmt die Drosselspule L Energie aus wenigstens einer Phase der Quelle auf. Im Falle eines Ist-Wertes größer als der Soll-Wert werden die Schaltmodule so gesteuert, daß die Drosselspule L Energie an eine oder mehrere Phasen der Quellen $e_{11}$ bis $e_{13}$ abgibt. Diese bilden dann Energieverbraucher. Beispielsweise fließt dabei Strom über das Schaltmodul $S_{11b}$ zur Quelle $e_{11}$ und über die Quellen $e_{12}$, $e_{13}$ sowie die Schaltmodule $S_{12a}$, $S_{13a}$ zur Drosselspule zurück. Bleibt schließlich im Falle eines dem Soll-Wert entsprechenden Ist-Wertes das Energieneveau unverändert, werden die Schaltmodule wenigstens eines Brückenzweiges eingangs- oder ausgangsseitig geschaltet, und damit wird für die Drosselspule ein Kurzschlußkreis zur Erhaltung des Energiniveaus gebildet.

In der zweiten Teilzeit $t_{s2}$ der Schaltperiode $t_s$, für welche aufgabengemäß ebenfalls die Bedingung gilt, daß die Schaltfrequenz $f_s$ groß gegenüber der ausgangsseitigen Betriebsfrequenz $\frac{\omega_2}{2\pi}$ sein soll, sind die eingangsseitigen Schaltmodule $S_{11a}$ bis $S_{13b}$ geöffnet. Im Ist-Wert/Soll-Wert-Regelungskreis der Ausgangsseite werden Kenngrößen der Verbraucher, z.B. die Augenblickswerte der Ausgangsspannungen (das sind gemäß der Darstellung in Fig.1 Phasenspannungsdifferenzen) mit einem jeweiligen Soll-Wert verglichen. Die daraus ermittelte Vergleichs-Differenzspannung $\Delta U$ dient zum Ansteuern von Schaltmodulen, wodurch eine Phasenspannungsänderung und damit eine Korrektur des Ist-Wertes erzielt wird. Werden z.B. Phasenspannungen $e_{21}$ und

$e_{22}$ betrachtet, und ergibt die Differenz derselben im Vergleich mit einer Bezugsspannung $U_{ref1}$ eine Vergleichs-Differenzspannung $\Delta U_1$, werden zu deren Änderung die Schaltmodule $S_{21a}$ und $S_{22b}$ oder $S_{22a}$ und $S_{21b}$ angesteuert und geschaltet.

Im Falle eines gegenüber dem betreffenden Soll-Wert kleineren Differenzspannungswertes $\Delta U_1$ aus den Phasenspannungen $e_{21}$ und $e_{22}$ müssen diese erhöht werden. Somit muß Energie aus der Drossel in die beiden Verbraucher $e_{21}$ und $e_{22}$ fließen. Bei gegenüber dem Soll-Wert höherem Differenzspannungswert $\Delta U_1$ müssen die Phasenspannungen vermindert werden. Die Verbraucher werden zu Quellen und geben Energie an die Drosselspule ab. Mit diesem Regelprinzip ist jede gewünschte ausgangsseitige Spannung erzielbar.

Ein Aufbau nach Fig.1 kann anstelle von Spannungsquelle e Stromquellen i aufweisen. Diese bilden in Verbindung mit einem nachgeschalteten Kondensator als Energiespeicherelement eine Konstantspannungsquelle. Eine entsprechende Anordnung ist in Fig.2 gezeigt. Für die gegenseitige Verbindung der Stromquellen auf der Eingangsseite und der Verbraucher auf der Ausgangsseite gelten die entsprechenden Erläuterungen zu Fig.1. Der weitere Unterschied zwischen beiden Ausführungsformen besteht darin, daß während der Einschaltdauer der eingangsseitigen Schaltmodule zur Speisung des Kondensators C die Verbraucher kurzgeschlossen und demzufolge die zugeordneten Modulpaare geschaltet sind, dabei ist zu beachten, daß die Stromquelle aus dem Stromkreis ausgeschaltet ist, wenn sie kurzgeschlossen ist. Der Kondensator C liegt dann mit einem Pol über die geschalteten, ausgangsseitigen Schaltmodule an der unteren Schiene der Mehr-Phasen-Brückenschaltung des Umrichtereingangs und er wird während der Teilzeit $t_{s1}$ der HF-Schaltperiode $t_s$ mittels Ansteuerung der eingangsseitigen Schaltmodule aufgeladen.

Für die Energieübertragung mittels Quellen $i_1$ und Energiespeicherelement C gelten die Ausführungen zu Fig.1 entsprechend. Der Kondensator kann in der Teilziet $t_{s1}$ zur Erzielung eines Spannungs-Soll-Wertes Energie aus den Quellen aufnehmen oder aber bei überhöhtem Spannungs-Ist-Wert zu dessen Verminderung Energie an die Quellen abgeben. Soll z.B. der Kondensator aus der Quelle $i_{11}$ geladen werden, sind das Schaltmodul $S_{11a}$ geschaltet, die Schaltmodule $S_{12a}$, $S_{13a}$ geöffnet, die Quellen $i_{12}$, $i_{13}$ mittels der Schaltmodule $S_{12b}$, $S_{13b}$ kurzgeschlossen und das Schaltmodul $S_{11b}$ geöffnet. Zur Übertragung der Energie aus dem Energiespeicherelement zur Ausgangsseite des Umrichters sind in der zweiten Teilzeit $t_{s2}$ sämtliche primären Schaltmodule geschaltet. Damit sind die Quellen $i_1$ kurzgeschlossen. Der Energiefluß erfolgt durch direktes geregeltes Schalten von ausgangsseitigen Schaltmodulen. Dazu ist eine Soll-Wert-Steuerung vorgesehen. Wenn der Strom-Ist-Wert kleiner als der Soll-Wert ist und der Pluspol des Verbrauchers $i_{21}$ zwischen $S_{21a}$ und $S_{21b}$

liegt, fließt Energie aus dem Kondensator über die Schaltmodule $S_{13a}$, $S_{13b}$ und das Schaltmodul $S_{21b}$ zum Verbraucher $i_{21}$ und der Stromkreis ist über die Schaltmodule $S_{22a}$ und $S_{23a}$ weiter geschlossen, während die übrigen Schaltmodule der Ausgangsseite des Umrichters geöffnet sind. Übersteigt der Ist-Wert den Soll-Wert $i_{21ist} > i_{21soll}$, nimmt die Kapazität in der zweiten Teilzeit Energie aus dem Verbraucher auf, der dann als Quelle arbeitet. Bei dem Beispiel des Verbrauchers $i_{21}$ sind das Schaltmodul $S_{21a}$ sowie die Schaltmodule $S_{22b}$ und $S_{23b}$ geschaltet. Die übrigen Schaltmodule der Umrichter-Ausgangsseite sind geöffnet. Zum Kurzschließen der Stromquellen sind die entsprechenden eingangsseitigen Schaltmodule geschaltet. Entspricht der Ist-Wert dem Soll-Wert, so bleibt die im Kondensator befindliche Energie erhalten. Dann sind in der ersten Teilzeit sämtliche eingangsseitigen Schaltmodule mit dem Index a geöffnet und sämtliche Module mit dem Index b geschaltet, so daß Quellen und Verbraucher kurzgeschlossen sind und der Kondensator aus dem Stromkreis ausgeschlossen ist. Ausgangsseitig haben die Schaltmodule den gleichen Schaltzustand.

Auch diese Schaltun-g ermöglicht mit an sich bekannter Regelungstechnik bei geringem Aufwand für Schaltungskomponenten eine mittels Hochfrequenz steuerbare Energieübertragung durch Impulsbetrieb, wobei die Pulsfrequenz hoch ist gegenüber der Betriebsfrequenz von Quelle und/oder Verbraucher und die Pulsfrequenzperiode unterteilt ist.

Vereinfachungen der in den Fig. 1 und 2 dargestellten Umrichteranordnungen führen zu Ausführungsformen, wie sie z.B. als bekannt in Fig.4 und, erfindungsgemäß ausgebildet, in Fig.5 jeweils mit Drosselspule dargestellt sind. Diese und die folgenden Figuren zeigen nicht wie die Fig. 1 und 2 für die Schaltelemente das allgemeine Symbol eines Schalters, sondern für schaltbare und nicht schaltbare Schaltungselemente das jeweils festgelegte Zeichensymbol. Gleichrichterdioden als nicht gesteuert schaltbare Bauelemente sind daher mit D, Transistoren und Thyristoren als jeweils schaltbare Bauelemente sind mit T bzw. mit Th gekennzeichnet, und jede Kennzeichnung enthält zusätzlich eine der jeweiligen Zuordnung zu Eingang oder Ausgang des Umrichters entsprechende Zusatzbezeichnung.

Die elektrische Zuordnung von nicht schaltbaren und schaltbaren Bauelementen zu einer Schaltung wird weiterhin als Schaltstruktur bezeichnet, und es wird zwischen primärer Schaltstruktur und sekundärer Schaltstruktur unterschieden.

Die Anordnung der Fig.4 entspricht dem Stand der Technik, hier ändert sich die Stromrichtung in der Drossel, wenn die Energie in die andere Richtung fließt. Fig.5 zeigt einen Umrichter, bei welchem Wechselspannungsquelle und Wechselspannungsverbraucher jeweils in der Diagonale einer als Brückenschaltung ausgebildeten primären bzw. sekundären Schaltstruktur mit einem Transistor je Zweig angeordnet sind. Es sind npn-Transistoren vorgesehen, und ihre elektrische Polung ist durch die elektrische Zuordnung der Drosselspule zu den Schaltstrukturen bestimmt.In der Teilzeit $t_{s1}$ speist die Quelle $e_1$ über die Transistoren $T_{11a}$, $T_{12b}$ oder $T_{12a}$, $T_{11b}$ die Drosselspule. Es wird der Eingangsstrom geregelt. Hierzu wird auf die Ausführungen zu Fig.1 verwiesen. Nachdem die schaltbaren Halbleiterbauelemente Transistor und Thyristor keine Schaltstellungen im Sinne von mechanischen Schaltern aufweisen, sondern einen sogenannten Sperrzustand bzw. Durchlaßzustand, werden nachfolgend die beiden Schaltzustände jeweils mit gesperrt bzw. geschaltet bezeichnet.

Alle Transistoren der sekundären Schaltstruktur in der ersten Teilzeit (Fig.5) sind gesperrt. In der zweiten Teilzeit sind die Transistoren der primären Schaltstruktur gesperrt. Bei einem Spannungs-Ist-Wert kleiner als der Soll-Wert erfolgt der Energiefluß aus der Drosselspule über Transistor $T_{21b}$ zum Verbraucher $e_2$, und über Transistor $T_{22a}$ ist der Stromkreis geschlossen, wenn der Pluspol des Wechselspannungsverbrauchers zwischen den Transistoren $T_{21a}$ und $T_{21b}$ liegt. Bei übersteigendem Ist-Wert fließt Energie aus dem Verbraucher über die Transistoren $T_{22b}$ und $T_{21a}$ zur Drosselspule, wenn der Pluspol des Wechselspannungsverbrauchers zwischen $T_{21a}$ und $T_{21b}$ liegt.

Eine Schaltung nach Fig.5 kann auch mit einer Drossel L ausgestattet werden, die zwei Wicklungen auf einem gemeinsamen Kern ausweist, dabei muß sie so dimensioniert sein, daß die maximale Ausgangsleistung auch bei keiner eingangsseitigen Energiezufuhr immer erreichbar ist, was allgemein bei Wechselstromversorgung gilt. Diese so gestaltete Drossel kann beim Übergang von $T_{s1}$ auf $T_{s2}$ den Strom von der Wicklung der Primärseite auf die der Sekundärseite übernehmen. Sie stellt gleichzeitig in dieser Schaltung einen Hochfrequenz-Übertragungstransformator dar, der gekoppelt mit unterschiedlichen Schaltelementen auch alle notwendigen Schaltvariationen und Stromflußbilder ermöglicht.

In Fig.6 ist eine weitere vorteilhafte Ausbildung eines Umrichters nach der Erfindung ein Wechselrichter mit einem Transformator zwischen und parallel zu den Schaltstrukturen dargestellt. Der Transformator ist erfindungsgemäß für gewünschte Konstantstromspeisung sowie als Hochfrequenz-Schalttransformator bemessen und ausgebildet. Er dient ferner gleichzeitig zur galvanischen Trennung von Eingangs- und Ausgangsseite des Umrichters. Die primäre Schaltstruktur besteht aus zwei Zweigen mit je einer Diode $D_{1a}$, $D_{1b}$ für Betrieb mit Energiefluß zur Eingangsseite. Die sekundäre Schaltstruktur entspricht derjenigen in Fig.5 mit dem Unterschied der durch die beiden Wicklungen des Transformators bedingten Umkehrung der Stromflußrichtung auf der Umrichter-Ausgangsseite.

In der ersten Teilzeit der Schaltperiode wird der Eingangsstrom geregelt. Aus der Quelle $E_1$ fließt Strom über den Transistor $T_{1a}$ in die Primärwicklung des Transformators HFST und über den Transistor $T_{1b}$ zurück. Die Spannung an der Quelle $E_1$ sei größer als diejenige am Verbraucher $e_2$. Alle Bauelemente der sekundären Schaltstruktur sind gesperrt. In der zweiten Teilzeit sind beide Transistoren der primären Schaltstruktur gesperrt. Bei einem gegenüber dem Soll-Wert niedrigeren Ist-Wert der Ausgangsspannung erfolgt Energiefluß aus der Sekundärwicklung des Transformators über die Transistoren $T_{21a}$ und $T_{22b}$ oder $T_{22a}$ und $T_{21b}$ zum Verbraucher $e_2$. Arbeitet der Umrichter als Wechselrichter, so wird in entsprechender Weise Energie über das jeweils zu schaltende Transistorpaar der sekundären Schaltstruktur in den Verbraucher übertragen. Bei einem den Soll-Wert übersteigenden Spannungs-Ist-Wert liefert der Verbraucher $e_2$ Energie über den Transformator und über die Dioden zur Quelle $E_1$.

Die Vorteile dieser Ausführungsform sind einfache Steuerung der schaltbaren Bauelemente mittels der zweigeteilten Schaltperiode mit hoher Schaltfrequenz, wie sie bei der Anordnung nach Fig.5 ebenfalls erzielbar ist, ferner Kurzschlußfestigkeit auf der Umrichterausgangsseite mit konstantem Ausgangsstrom, betriebsweise ohne Kommutierungsprobleme, einfacher Parallelbetrieb sowie unterbrechungsfreie Stromversorgung ohne Gleichrichter.

Eine andere vorteilhafte Ausführungsform eines Umrichters nach der Erfindung mit gegenüber demjenigen nach Fig.6 vereinfachtem Aufbau ist in Fig.7 dargestellt. Die Primärwicklung des HF-Transformators ist an einem Ende mit dem Emitter eines Transistors $T_1$ und am anderen Ende mit der Anode einer Gleichrichterdiode $D_1$ verbunden. Die weiteren Anschlüsse der beiden Bauelemente der primären Schaltstruktur sind zum Pluspol der Quelle geführt, und der Wicklungsmittelpunkt liegt am Minuspol der Quelle $E_1$. Der Transistor $T_1$ ist für Energiefluß von der Quelle zur Transformatorwicklung und die Diode ist für Energiefluß von der Transformatorwicklung zur Quelle vorgesehen und entsprechend elektrisch gepolt. Die sekundäre Schaltstruktur der Transistoren $T_{21a}$ bis $T_{22b}$ stimmt mit derjenigen in Fig.6 überein. Als Verbraucher, der auch Quelle sein kann, ist ein Kondensator gewählt, der als Verbraucher von Spannungstyp wirkt und gleichzeitig als ein Filter für Oberwellen dient, an welchem die Ausgangsspannung $U_{aus}$ geregelt wird. In der ersten Teilzeit ist zur Regelung des Eingangsstromes bei gegenüber einem Soll-Wert geringeren Ist-Wert der Transistor $T_1$ geschaltet. Alle Transistoren der sekundären Schaltstruktur sind gesperrt. In der zweiten Teilzeit ist der Transistor $T_1$ gesperrt, und bei positiver Ausgangsspannung (plus der $U_{aus}$ liegt an der $T_{21}$-Seite) nimmt der Verbraucher Energie aus dem Transformator über die Transistoren

$T_{21a}$ und $T_{22b}$. Bei gegenüber dem Soll-Wert höherem Spannungs-Ist-Wert sind die Transistoren $T_{22a}$ und $T_{21b}$ geschaltet. Arbeitet der Verbraucher als Quelle, so erfolgt bei negativer Ausgangsspannung (plus der $U_{aus}$ liegt an der $T_{22}$-Seite) der Energiefluß bei übersteigendem Spannungs-Ist-Wert über die Transistoren $T_{21a}$ und $T_{22b}$ jeweils eingangsseitig über die Diode $D_1$ zur Quelle $E_1$. Bei mit dem Spannungs-Soll-Wert übereinstimmender Ausgangsspannung kann der Drosselstrom über die Bauelemente von zwei in Reihe geschalteten Zweigen jeder Schaltstruktur kurzgeschlossen werden. Damit unterbleibt ein Energiefluß zum Verbraucher. Für die beschriebene Funktion sei die Spannung der Quelle $E_1$ höher gegenüber der Ausgangsspannung $U_{aus}$.

Wird die Diode $D_1$ durch einen Transistor ersetzt, entfällt diese Beschränkung des Verhältnisses von Eingangs- und Ausgangsspannung.

In Fi.8 ist eine noch weiter vereinfachte Ausführungsform eines Umrichters als besonders günstige Ausgestaltung der Erfindung gezeigt. Primäre und sekundäre Schaltstruktur bilden jeweils zusammen mit der entsprechenden Transformatorwicklung eine Mittelpunktschaltung. Die primäre Schaltstruktur stimmt mit derjenigen der Anordnung nach Fig.7 überein. Die sekundäre Schaltstruktur weist in jedem Zweig einen Thyristor $Th_1$ bzw. $Th_2$ auf. Die Schaltperiode ist in eine Teilzeit für die Transistorfunktion und eine weitere Teilzeit für die Thyristorfunktion unterteilt. Für die Stromregelung der Umrichter-Eingangsseite gelten die Aussagen der Beschreibung zu Fig.7. Zur Spannungsregelung der Umrichterausgangsseite ist bei einem den Ist-Wert übersteigenden Soll-Wert im Falle positiver Ausgangsspannung (Thyristorseite) der Thyristor $Th_1$ und im Falle negativer Ausgangsspannung der Thyristor $Th_2$ geschaltet. Bei negativer Ausgangsspannung besteht bezüglich der Spannungsregelung die umgekehrte Zuordnung der Thyristoren. Für alle genannten Betriebsfälle sei die Spannung der Quelle $E_1$ stets größer als die Ausgangsspannung $U_{aus}$ (Kommutierung vob $Th_1$ und $Th_2$ erfolgt über geschalteten $T_1$). Schließlich zeigt Fig.9 einen einphasigen, gegenüber der Anordnung der Fig.2 vereinfachten Umrichter mit Stromquellen i und mit zusätzlichem HF-Transformator. Die primäre Schaltstruktur ist als Brückenschaltung ausgebildet, die in der Diagonalen die Gleichspannungsquelle aufweist und in Reihe mit einem Kondensator $C_1$ und der Primärwicklung des Transformators angeordnet ist. Die Brückenschaltung besteht aus zwei Zweigpaaren mit je einem Transistor und einer Diode in Gegentaktschaltung und mit vertauschter Reihenfolge der Zweigpaarelemente.Parallel zur Diode $D_{14}$ ist ein Transistor $T_{14}$ geschaltet. Als sekundäre Schaltstruktur ist eine Brückenschaltungmit je einer Antiparallelschaltung je Zweig aus Transistor und Diode vorgesehen. In der Diagonalen liegt ein Wechselstromverbraucher. Die Zweige sind sämtlich elektrisch gleichsinnig angeordnet. In Reihe zur Brückenschaltung liegen der Kondensator $C_2$ und die Sekundärwicklung des Transistors.

Die Schaltperiode besteht auch für diesen Aufbau aus zwei Teilzeiten $t_{s1}$ und $t_{s2}$. In der ersten Teilzeit sind die eingangsseitigen Transistoren gesperrt. Die Kondensatoren $C_1$ und $C_2$ werden über die Dioden $D_{11}$ und $D_{14}$ aufgeladen, und die Energie des Kondensators wird auf Konstantniveau gehalten. Die Transistoren $T_{21}$ und $T_{22}$ der sekundären Schaltstruktur sind geschaltet, so daß der Wechselstromverbraucher kurzgeschlossen ist und der Ladestrom durch $C_1$ und $C_2$ fließen kann. Die Forderung nach Kurzschluß der ausgangsseitigen Quelle bei Ausführungeformen mit Stromquellen und Kapazität während der ersten Teilzeit ist mittels der Dioden $D_{21}$ bis $D_{24}$ erfüllt. In der zweiten Teilzeit sind die Transistoren $T_{12}$ und $T_{14}$ dar primärseitigen Schaltstruktur geschaltet, die Energie des Kondensators $C_1$ fließt über die Transistoren zur Primärwicklung und wird auf die Sekundärwicklung übertragen, der Kondensator $C_2$ wird dabei auch entladen. Übersteigt der Soll-Wert den Ist-Wert des Ausgangsstromes, so werden die eine Stromerhöhung bewirkenden Schaltelemente der sekundären Schaltstruktur geschaltet. Dies erfolgt mittels der Transistoren $T_{21}$ bis $T_{24}$. Damit wird die Energie des Kondensators auf den Verbraucher übertragen. Übersteigt der Ist-Wert den Soll-Wert, so werden die eine Stromverminderung bewirkenden Schaltelemente, die Dioden $D_{21}$ und $D_{24}$ oder $D_{22}$ und $D_{23}$ geschaltet.

Der Verbraucher gibt Energie an den Kondensator ab. Die Transistoren $T_{21}$ bis $T_{24}$ sind gesperrt. Bei dem Soll-Wert entsprechender Ausgangsspannung, d.h. bei unverändertem Energieniveau des Verbrauchers, sind die Transistoren beider Schaltstrukturen so geschaltet, daß Eingangs- und Ausgangsstromquellen kurzgeschlossen sind. Hierbei ist zu beachten, daß der Strom in manchen Schaltzuständen in beide Richtungen fließen soll und daß Kurzschluß der ausgeschalteten Quelle und Verbraucher auch durch andere Schaltstrukturen möglich ist. Deshalb sind sehr unterschiedliche Schaltstrukturen auch bei Einsatz von Transistoren oder Dioden, die nur einseitig in der Stromrichtung arbeiten, erforderlich.

## Patentansprüche

1. Umrichter für ein- und mehrphasige Versorgungsquellen und ein- und mehrphasige Verbraucher, auch im Vier- QuadrantenBetrieb und hohem Wirkungsgrad, mit folgenden Merkmalen:
 a) Versorgungsquelle und Verbraucher sind vom gleichen Typ, Spannungs- oder Stromtyp (Fig. 1; Fig. 2),
 b) Versorgungsquelle und Verbraucher sind n-phasig, wobei n > 1 ist (Fig. 1, Fig. 2),
 c) Versorgungsquelle und Verbraucher sind über Halbleiterschalter mit einem Zwischenkreis verbunden (Figuren 1, 2, 5, 6, 7, 8, 9),

d) der Zwischenkreis enthält ein passives Speicherelement ausgeführt als induktives oder kapazitives Element,

e) die Polarität der im Speicherelement gespeicherten elektrischen Größe bleibt gleich, unabhängig von der Richtung des Leistungsflusses (Stromrichtung durch Drossel in Fig. 1, 5, 6, 7, 8, und Spannung am Kondensator in Fig. 2, 9),

f) die Energieversorgung von Speicherelement und Verbraucher erfolgt mittels Impulsbetrieb,

g) die Halbleiterschalter werden mit hoher Frequenz gegenüber den Betriebsfrequenzen von Versorgungsquelle und Verbraucher betrieben, wobei die Eingangs- und Ausgangsfrequenz gleich oder größer Null sein können, aber bei eingangs- und ausgangsseitig einphasigem Betrieb mindestens eine Frequenz größer als Null sein muß (Fig. 1, 2, 5, 6, 7, 8, 9),

h) eine Schaltfrequenzperiode des Umrichters ist unterteilt in eine erste Teilzeit zur Verbindung des Speicherelementes mit den Quellen und eine zweite zur Verbindung des Speicherelementes mit den Verbrauchern, so daß kein direkter Leistungsfluß zwischen Quellen und Verbrauchern unter Umgehung des Speicherelementes stattfindet.

i) bei Umkehr des Leistungsflusses vertau-schen Versorgungsquelle und Verbraucher ih-re Funktion.

2.  Umrichter nach Anspruch 1, dadurch gekennzeichnet, daß als Energiespeicherelement eine Drosselspule vorgesehen ist.

3.  Umrichter nach Anspruch 1, dadurch gekennzeichnet, daß als Energiespeicherelement ein Kondensator vorgesehen ist (Fig. 2).

4.  Umrichter nach Anspruch 1, dadurch gekennzeichnet, daß als Energiespeicherelement ein Transformator mit integrierter Drossel vorgesehen ist, der als Energiespeicherelement ausgebildet und gleichzeitig als Trenntransformator geeignet ist.

5.  Umrichter nach Anspruch 1, dadurch gekennzeichnet, daß Quelle und Verbraucher einphasig mit untereinander verschiedenen Spannungen und Frequenzen vorgesehen sind (Fig. 5)

6.  Umrichter nach Anspruch 4, dadurch gekennzeichnet, daß die Schaltung ein Wechselrichter mit sinusförmiger Ausgangsspannung ist, wobei der Transformator zur galvanischen Trennung und zur Spannungseinstellung gleichzeitig auch Speicherelement (Drossel) ist, so daß die Schalt-frequenz bzw. Transformatorfrequenz wesent-lich höher als die Ausgangsfrequenz ist (Fig. 6).

7.  Umrichter nach Anspruch 4, dadurch gekennzeichnet, daß als Versorgungsquelle eine einphasige sinusförmige Wechselspannung dient und am Ausgang Gleichspannungsverbraucher vorgesehen sind, wobei ein Transformator als Speicherelement (Drossel), zur galvanischen Trennung und zur Spannungseinstellung mit der Frequenz der Schaltelemente, die wesentlich höher als die Eingangsfrequenz ist, arbeitet.

8.  Umrichter nach Anspruch 1, dadurch gekennzeichnet, daß ein Transformator als Drossel in Mittelpunktschaltung auf der Primärseite (Fig. 7) oder auf der Sekundärseite (Fig. 8) vorgesehen ist.

9.  Umrichter nach Anspruch 1, dadurch gekennzeichnet, daß bei Gleichstrom einprägender Ver-sorgungsquelle und Wechselstrom einprägen-dem Verbraucher oder Wechselstrom einprägen-der Versorgungsquelle und Gleichstrom einprä-gendem Verbraucher ein in zwei Teile unterteilter Kondensator als Speicherelement und ein Transformator für die Schaltfrequenz der Schalter vorgesehen ist (Fig. 9).

**Claims**

1.  Converter for single and multi-phase supply sources and single and multi-phase consumers, also in four quadrant operation and with a high efficiency, comprising the following features:

a) supply source and consumer are of the same type, voltage or current type (Fig. 1; Fig. 2),

b) supply source and consumer are n-phased, wherein n > 1 (Fig. 1, Fig. 2),

c) supply source and consumer are connected by means of a semi-conductor switch with an intermediate circuit (Figs. 1, 2, 5, 6, 7, 8, 9),

d) the intermediate circuit includes a passive storage element embodied as an inductive or capacitive element,

e) the polarity of the electrical values stored in the storage element remains the same, independently of the direction of the energy flow (current direction through the choke in Figs. 1, 5, 6, 7, 8 and voltage at the capacitor in Figs. 2, 9),

f) the energy supply of the storage element and the consumer ensues by means of a pulse operation,

g) the semi-conductor switches are operated with a high frequency in comparison to the operation frequencies of the supply source and the consumer, wherein the input and output frequency can be the same as or greater than zero, but the input-sided and output-sided single phase operation must at least have a frequency greater than zero (Fig. 1, 2, 5, 6, 7, 8, 9)

h) a switching frequency period of the converter is subdivided into a first partial time for connecting the storage element with the sources and into a second for connecting the storage element with the consumers so that no direct energy flow between the sources and consumers takes place by way of bypassing the storage element,

i) in the case of reversal of the energy circuit, the voltage source and consumer inter-change their operation.

2. Converter according to claim 1, characterized in that a choke spool is provided as the energy storage element.

3. Converter according to claim 1, characterized in that a capacitor is provided as the energy storage element (Fig. 2).

4. Converter according to claim 1, characterized in that a transformer with an integrated choke which is formed as an energy storage element and is simultaneously suitable as an isolating transformer is provided as the energy storage element.

5. Converter according to claim 1, characterized in that the source and consumer are provided as a single phase type with mutually different voltages and frequencies (Fig. 5).

6. Converter according to claim 4, characterized in that the switch is an inverted rectifier with a sinusoidal output voltage, wherein the transformer is simultaneously a storage element (choke) for galvanic isolation and for voltage adjustment so that the switching frequency or transformer frequency is substantially greater than the output frequency (Fig. 6).

7. Converter according to claim 4, characterized in that a single phase sinusoidal alternating voltage serves as the supply source and is provided at the output of direct voltage consumers, wherein a transformer operates as a storage element (choke) for galvanic isolation and for voltage adjustment with the frequency of the switching element, which is substantially greater than the input frequency.

8. Converter according to claim 1, characterized in that a transformer is provided as a choke at the mid-point tapping at the primary side (Fig. 7) or at the secondary side (Fig. 8).

9. Converter according to claim 1, characterized in that in the case of a direct current impressed supply source and an alternating current impressed consumer or an alternating current impressed supply source and a direct current compressed consumer, a capacitor subdivided into two parts is provided as a storage element and a transformer is provided for the switching frequency of the switches (Fig. 9).

## Revendications

1. Convertisseur pour sources d'alimentation monophasée et polyphasée et charges monophasées et polyphasées, également en régime à quatre quadrants et avec rendement élevé, avec les caractéristiques suivantes :

a) la source d'alimentation et la charge sont du même type, type de tension ou type de courant (figure 1 ; figure 2),

b) la source d'alimentation et la charge sont à n phases, n étant supérieur à 1 (figure 1, figure 2),

c) la source d'alimentation et la charge sont reliés par des commutateurs à semi-conducteurs à un circuit intermédiaire (figures 1, 2, 5, 6, 7, 8, 9),

d) le circuit intermédiaire contient un élément accumulateur passif réalisé sous la forme d'un élément inductif ou capacitif,

e) la polarité de la grandeur électrique mémorisée dans l'élément accumulateur reste égale, indépendamment du sens du flux de puissance (sens du courant traversant la bobine sur les figures 1, 5, 6, 7, 8, et tension sur le condensateur sur les figures 2, 9),

f) l'alimentation électrique de l'élément accumulateur et de la charge se fait par régime impulsionnel.

g) les commutateurs à semi-conducteurs sont commandés par une fréquence élevée par rapport aux fréquences de service de la source d'alimentation et de la charge, les fréquences d'entrée et de sortie pouvant être égales ou supérieures à zéro, mais une fréquence au moins devant être supérieure à zéro avec un régime en monophasé côté entrée et côté sortie (figures 1, 2, 5, 6, 7, 8, 9).

h) une période de fréquence de commutation du convertisseur est subdivisée en une première période partielle pour la connexion de l'élément accumulateur avec les sources et une deuxième pour la connexion de l'élément accumulateur avec les charges, de sorte qu'il n'y a pas de flux de puissance direct entre les sources et les charges en contournant l'élément accumulateur.

i) en cas d'inversion du flux de puissance, la source d'alimentation et la charge permutent leur fonction.

2. Convertisseur selon la revendication 1, caractérisé en ce qu'une bobine d'inductance est prévue comme élément accumulateur d'énergie.

3. Convertisseur selon la revendication 1, caractérisé en ce qu'un condensateur est prévu comme élément accumulateur d'énergie (figure 2).

4. Convertisseur selon la revendication 1, caractérisé en ce qu'il est prévu comme élément accumulateur d'énergie un transformateur avec bobine intégrée qui est conçu comme un élément accumulateur d'énergie et convient en même temps comme transformateur de séparation.

5. Convertisseur selon la revendication 1, caractérisé en ce que la source et la charge sont prévues en monophasé avec des tensions et des fréquences différentes entre elles (figure 5).

6. Convertisseur selon la revendication 4, caractérisé en ce que le montage est un onduleur avec tension de sortie sinusoidale, le transformateur pour la séparation galvanique et pour le réglage de la tension étant en même temps également élément accumulateur (bobine), de sorte que la fréquence de commutation et la fréquence du transformateur soient nettement supérieures à la fréquence de sortie (figure 6).

7. Convertisseur selon la revendication 4, caractérisée en ce qu'une tension alternative sinusoïdale monophasée fait fonction de source d'alimentation et que des charges à tension continue sont prévues à la sortie, un transformateur faisant office d'élément accumulateur (bobine) et travaillant pour la séparation galvanique et pour le réglage de la tension avec la fréquence des éléments de circuit qui est nettement supérieure à la fréquence d'entrée.

8. Convertisseur selon la revendication 1, caractérisé en ce qu'un transformateur est prévu comme bobine dans la prise médiane du côté primaire (figure 7) ou du côté secondaire (figure 8).

9. Convertisseur selon la revendication 1, caractérisé en ce que, avec une source d'alimentation appliquant du courant continu et une charge appliquant du courant alternatif ou une source d'alimentation appliquant du courant alternatif et une charge appliquant du courant continu, il est prévu un condensateur subdivisé en deux parties comme élément accumulateur et un transformateur pour la fréquence de commutation des commutateurs (figure 9).

Fig. 1

Fig. 2

Eingang                                    HFT                                    Ausgang

Fig. 3a

Fig. 3

EP 0 474 060 B1

Fig. 4

Fig. 5

Fig. 6

Fig. 7

Fig. 8

Fig. 9